# EUROPEAN PATENT APPLICATION

(11) **EP 3 556 831 A1**
(43) Date of publication of application: **23.10.2019**
(21) Application number: 17880607.1
(22) Date of filing: 27.10.2017
(51) Int. Cl.: C10M 169/04, C10M 101/02, C10M 135/20, C10M 137/04, C10M 137/08, C10M 137/10, C10M 141/08, C10M 141/10, C10N 20/00, C10N 20/02, C10N 30/00, C10N 30/06, C10N 40/04, C10N 40/25

(54) **LUBRICATING OIL COMPOSITION, LUBRICATION METHOD, AND GEAR**

(30) Priority: 14.12.2016 JP 2016242606
(71) Applicant: Idemitsu Kosan Co., Ltd., Chiyoda-ku Tokyo 100-8321 (JP)
(72) Inventor: NAKAHARA, Yasuhito, Ichihara-shi Chiba 299-0107 (JP); YOKOMIZO, Masato, Ichihara-shi Chiba 299-0107 (JP); KAMANO, Hideki, Ichihara-shi Chiba 299-0107 (JP)
(74) Representative: Vossius & Partner Patentanwälte Rechtsanwälte mbB
(86) International application number: PCT/JP2017/038880
(87) International publication number: WO 2018/110119

(57) **Abstract**

Provided are a lubricating oil composition excellent in anti-seizing properties and ant-wear properties, containing a base oil containing at least a mineral oil and a sulfur- and phosphorus-containing anti-wear agent, a mass ratio (S/P ratio) of a sulfur atom and a phosphorus atom contained in the composition being 7.5 or more and 16 or less,; and a lubrication method and a gear each using the same.

## Description

### Technical Field

The present invention relates to a lubricating oil composition, and a lubrication method and a gear each using the same.

### Background Art

Lubricating oil compositions are used in various fields, for example, those for internal combustion engines to be used for gasoline engine, diesel engine, and other internal combustion engine and those for gearing device (hereinafter also referred to as "gear"), and are required to have a peculiar performance in conformity with an application. For example, lubricating oil compositions for gear are used for the purpose of preventing seizing or damage of the gear from occurring in various applications of gear, such as those for high-speed high-load gear of an automobile, etc., those for relatively light-load gear of general machinery, and those for relatively high-load gear of general machinery In order to prevent seizing or damage of the gear from occurring, performances, such as anti-seizing properties and anti-wear properties, are required, and for example, in those for manual transmission, anti-wear properties in a synchronizer mechanism are especially demanded, and in those for differential gear, anti-seizing properties are especially demanded.

As for lubricating oil compositions focusing the anti-seizing properties, for example, a lubricating oil composition in which various polysulfide compounds, such as a disulfide compound, a trisulfide compound, a tetrasulfide compound, and a pentasulfide compound, are blended in predetermined proportions; and a lubricating oil composition in which a phosphoric acid ester, a thiophosphoric acid ester, or the like is further blended are proposed (see PTL 1).

### Citation List

### Patent Literature

PTL 1: JP 2012-046683 A

### Summary of Invention

### Technical Problem

Now, in recent years, while downsizing and enhancing performance in automobiles and other general machinery progresses the downsizing and high performance in automobiles are remarkable, and gears to be mounted in automobiles are also required to achieve downsizing and high performance. For that reason, the lubricating oil compositions for gear are demanded to be improved in anti-seizing properties and anti-wear properties. As a method for improving the anti-seizing properties, for example, it may be considered to use an extreme pressure agent as in the lubricating oil composition described in PTL 1. But, if the addition amount of the extreme pressure agent is increased for the purpose of more improving the anti-seizing properties, the anti-wear properties are occasionally worsened. Thus, under the circumstance in which more stringent performances regarding the anti-seizing properties and anti-wear properties are demanded, these performances are difficultly made compatible with each other.

The lubricating oil composition described in PTL 1 is mentioned to be excellent in lubricity, oxidation stability, and extreme pressure properties, and the extreme pressure properties, namely the anti-seizing properties are evaluated by the Shell four-ball EP test. Although the Shell four-ball EP test is suitable for evaluation of the anti-seizing properties of a site having a small contact area, it is not suitable for evaluation of the anti-seizing properties in a site coming into contact with a plane, such as contact between toothed wheels in a gear. For that reason, in the case of using the lubricating oil composition of PTL 1 for a gear, whether or not excellent anti-seizing properties are revealed is unclear, and at the same time, whether or not excellent anti-wear properties are revealed is unclear, too. In particular, with respect to the lubricating oil composition for gear, in order to cope with more stringent requirement performances relative to the anti-seizing properties and anti-wear properties, further research and development are desired.

Under the foregoing circumstances, the present invention has been made, and an object thereof is to provide a lubricating oil composition which is excellent in anti-seizing properties and anti-wear properties and also a lubrication method and a gear each using the same.

### Solution to Problem

As a result of extensive and intensive investigations made by the present inventors, it has been found that the foregoing problems can be solved by the following inventions. Specifically, the present invention is to provide a lubricating oil composition having the following constitution and a lubrication method using the same.
1. A lubricating oil composition containing a base oil containing at least a mineral oil and a sulfur- and phosphorus-containing anti-wear agent, a mass ratio (S/P ratio) of a sulfur atom and a phosphorus atom contained in the composition being 7.5 or more and 16 or less.
2. A lubrication method including using a lubricating oil composition containing a base oil containing at least a mineral oil and a sulfur- and phosphorus-containing anti-wear agent, a mass ratio (S/P ratio) of a sulfur atom and a phosphorus atom contained in the composition being 7.5 or more and 16 or less.
3. A gear including a lubricating oil composition containing a base oil containing at least a mineral oil and a sulfur- and phosphorus-containing anti-wear agent, a mass ratio (S/P ratio) of a sulfur atom and a phosphorus atom contained in the composition being 7.5 or more and 16 or less.

### Advantageous Effects of Invention

In accordance with the present invention, it is possible to provide a lubricating oil composition which is excellent in anti-seizing properties and anti-wear properties and also a lubricating method and a gear each using the same.

### Description of Embodiments

An embodiment of the present invention (hereinafter also referred to as "present embodiment") is hereunder described. In this description, the numerical values of "X or more" and "Y or less" relating to the description of a numerical range are numerical values that can be combined in any manner.

### [Lubricating Oil Composition]

The lubricating oil composition of the present embodiment is one containing a base oil containing at least a mineral oil and a sulfur- and phosphorus-containing anti-wear agent, a mass ratio (S/P ratio) of a sulfur atom and a phosphorus atom contained in the composition being 7.5 or more and 16 or less.

### <Mass Ratio (S/P Ratio) of Sulfur Atom and Phosphorus Atom>

The lubricating oil composition of the present embodiment is required such that a mass ratio (S/P ratio) of a sulfur atom and a phosphorus atom contained in the composition is 7.5 or more and 16 or less. Here, the wording "mass ratio of a sulfur atom and a phosphorus atom contained in the composition" refers to a ratio of a mass of a sulfur atom and a mass of a phosphorus atom on a basis of the whole amount of the composition, and the mass ratio (S/P ratio) of a sulfur atom and a phosphorus atom is a value obtained by measuring the contents of the sulfur atom and the phosphorus atom in the composition and undergoing calculation. The contents of the sulfur atom and the phosphorus atom can be measured in conformity with JIS-5S-38-92. The mass of each of the sulfur atom and the phosphorus atom in the composition is a total amount of, in addition to each of the sulfur atom and the phosphorus atom contained in the base oil and the sulfur- and phosphorus-containing anti-wear agent, each of the sulfur atom and the phosphorus atom contained in an optionally added additive.

In the present embodiment, when the mass ratio (S/P ratio) is less than 7.5, the anti-seizing properties are not obtained. On the other hand, when the mass ratio (S/P ratio) is more than 16, at least one of the anti-seizing properties and the anti-wear properties is not obtained. From the viewpoint of obtaining excellent anti-seizing properties and anti-wear properties, the mass ratio (S/P ratio) is preferably 8 or more, more preferably 9 or more, still more preferably 10 or more, and especially preferably 11 or more, and it is preferably 15.5 or less, more preferably 15 or less, still more preferably 14.5 or less, and especially preferably 14 or less.

The mass ratio (S/P ratio) of a sulfur atom and a phosphorus atom can be regulated according to the kind of the sulfur- and phosphorus-containing anti-wear agent. In addition, the mass ratio (S/P ratio) can also be regulated according to selection of the kind of each of a phosphoric acid ester, a polysulfide, and other additive, which may be added as preferred optional components, regulation of the content of each of such optional components and the sulfur- and phosphorus-containing anti-wear agent, and so on.

### <Base Oil>

The lubricating oil composition of the present embodiment contains a base oil containing at least a mineral oil. In the present embodiment, when the mineral oil is not contained, a problem at the point of viscosity characteristics and stability against oxidation degradation arises, and the anti-seizing properties and anti-wear properties due to the sulfur- and phosphorus-containing anti-wear agent as mentioned later can be affected.

Examples of the mineral oil include atmospheric residual oils obtained by atmospherically distilling a paraffin-base, naphthene-base, or intermediate base crude oil; distillation oils obtained by vacuum-distilling the foregoing atmospheric residual oil; refined mineral oils obtained by subjecting the foregoing distillation oil to at least one treatment of solvent deasphaltation, solvent extraction, hydrocracking, solvent dewaxing, catalytic dewaxing, and hydrorefining; and mineral oils obtained by isomerizing, for example, a light neutral oil, an intermediate neutral oil, a heavy neutral oil, a bright stock, or a wax (GTL wax) produced by the Fischer-Tropsch process, or the like.

As for the mineral oil, though all of those classified into Groups 1, 2, and 3 in the base oil category according to API (American Petroleum Institute) can be used, those classified into Groups 2 and 3 are preferred from the viewpoints that sludge formation can be more suppressed, and that viscosity characteristics and stability against oxidation degradation, etc. are obtained.

In the present embodiment, the base oil may contain a synthetic oil so long as it contains a mineral oil. Examples of the synthetic oil include poly-α-olefin compounds, such as polybutene, an ethylene-α-olefin copolymer, and an α-olefin homopolymer or copolymer; various ester oils, such as a polyol ester, a dibasic acid ester, and a phosphoric acid ester; various ethers, such as polyphenyl ether; polyglycols; alkylbenzenes; and alkylnaphthalenes.

As for the base oil, the aforementioned mineral oil may be used either alone or in combination of plural kinds thereof, and it may also be used in combination with one or more of the aforementioned synthetic oils. In addition, one or more of the mineral oils and one or more of the synthetic oils may be combined and used as a mixed oil.

Although the base oil is not particularly limited in terms of a viscosity, its 100°C kinematic viscosity is preferably 1 mm²/s or more, more preferably 2 mm²/s or more, and still more preferably 5 mm²/s or more. In addition, an upper limit thereof is preferably 20 mm²/s or less, more preferably 18 mm²/s or less, and still more preferably 15 mm²/s or less. A 40°C kinematic viscosity of the base oil is preferably 10 mm²/s or more, more preferably 40 mm²/s or more, and still more preferably 70 mm²/s or more. In addition, an upper limit thereof is preferably 120 mm²/s or less, more preferably 110 mm²/s or less, and still more preferably 105 mm²/s or less. In addition, a viscosity index of the base oil is preferably 85 or more, more preferably 90 or more, and still more preferably 95 or more. In this specification, the kinematic viscosity and the viscosity index are each a value measured with a glass-made capillary viscometer in conformity with JIS K2283:2000. When the kinematic viscosity and the viscosity index of the base oil fall within the aforementioned ranges, the anti-seizing properties and the anti-wear properties become favorable.

The content of the base oil on a basis of the whole amount of the composition is typically 50% by mass or more, preferably 60% by mass or more, still more preferably 70% by mass or more, and yet still more preferably 80% by mass or more. In addition, an upper limit thereof is preferably 97% by mass or less, more preferably 95% by mass or less, and still more preferably 93% by mass or less.

### <Sulfur- and Phosphorus-Containing Anti-Wear Agent>

The lubricating oil composition of the present embodiment contains a sulfur- and phosphorus-containing anti-wear agent. When it does not contain a sulfur- and phosphorus-containing anti-wear agent, excellent anti-seizing properties and anti-wear properties are not obtained.

As the sulfur- and phosphorus-containing anti-wear agent, for example, compounds represented by the following general formulae (1) and (2) are preferred from the viewpoint of obtaining more excellent anti-seizing properties and anti-wear properties.

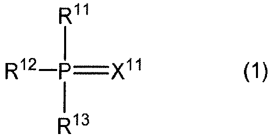

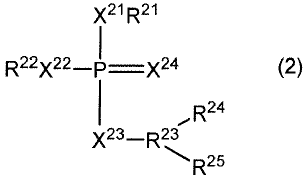

In the general formula (1), R¹¹ is a hydrogen atom, a hydroxy group, or a mercapto group; R¹² and R¹³ are each independently a hydroxy group, a mercapto group, -X¹²-R¹⁴, or -X¹³-R¹⁵-X¹⁴-R¹⁶, provided that at least one of R¹² and R¹³ is -X¹²-R¹⁴ or -X¹³-R¹⁵-X¹⁴-R¹⁶; and X¹¹, X¹², X¹³, and X¹⁴ are each independently an oxygen atom or a sulfur atom, provided that at least one of X¹¹, X¹², X¹³, and X¹⁴ is a sulfur atom. In addition, R¹⁴ and R¹⁶ are each independently a hydrocarbon group having 1 or more and 24 or less carbon atoms; and R¹⁵ is a hydrocarbon group having 1 or more and 24 or less carbon atoms.

From the viewpoint of obtaining more excellent anti-seizing properties and anti-wear properties, R¹¹ is preferably a hydrogen atom or a hydroxy group.

From the viewpoint of obtaining more excellent anti-seizing properties and anti-wear properties, it is preferred that not only R¹² and R¹³ are a hydroxy group or -X¹³-R¹⁵-X¹⁴-R¹⁶, but also at least one of R¹² and R¹³ is -X¹³-R¹⁵-X¹⁴-R¹⁶.

From the viewpoint of obtaining more excellent anti-seizing properties and anti-wear properties, preferred examples of the hydrocarbon group having 1 or more and 24 or less carbon atoms for R¹⁴ and R¹⁶ include an alkyl group, an alkenyl group, a cycloalkyl group, an aryl group, and an arylalkyl group. Among those, an alkyl group and an alkenyl group are more preferred, and an alkyl group is still more preferred.

Examples of the alkyl group include a methyl group, an ethyl group, various propyl groups, such as a n-propyl group and an isopropyl group, various butyl groups, such as a n-butyl group, an isobutyl group, a sec-butyl group, and a tert-butyl group, various pentyl groups, various hexyl groups, various heptyl groups, various octyl groups, various nonyl groups, various decyl groups, various undecyl groups, various dodecyl groups, various tridecyl groups, various tetradecyl groups, various pentadecyl groups, various hexadecyl groups, various heptadecyl groups, various octadecyl groups, various nonadecyl groups, various eicosyl groups, various heneicosyl groups, various docosyl groups, various tricosyl groups, and various tetracosyl groups. In addition, examples of the alkenyl group include those resulting from removal of two hydrogen atoms from such an alkyl group.

From the viewpoint of obtaining more excellent anti-seizing properties and anti-wear properties, the carbon number of each of the alkyl group and the alkenyl group is preferably 2 or more, more preferably 4 or more, and still more preferably 6 or more. In addition, an upper limit thereof is preferably 16 or less, more preferably 12 or less, and still more preferably 10 or less.

Preferred examples of the cycloalkyl group include those having 6 or more and 12 or less carbon atoms, such as a cyclohexyl group, various methylcyclohexyl groups, various ethylcyclohexyl groups, and various dimethylcyclohexyl groups; preferred examples of the aryl group include those having 6 or more and 12 or less carbon atoms, such as a phenyl group, various methylphenyl groups, various ethylphenyl groups, various dimethylphenyl groups, various propylphenyl groups, various trimethylphenyl groups, various butylphenyl groups, and various naphthyl groups; and preferred examples of the arylalkyl group include those having 7 or more and 12 or less carbon atoms, such as a benzyl group, a phenethyl group, various phenylpropyl groups, various phenylbutyl groups, various methylbenzyl groups, various ethylbenzyl groups, various propylbenzyl groups, various butylbenzyl groups, and various hexylbenzyl groups.

From the viewpoint of obtaining more excellent anti-seizing properties and anti-wear properties, preferred examples of the hydrocarbon group having 1 or more and 24 or less carbon atoms for R¹⁵ include an alkylene group and an alkenylene group, and of those, an alkylene group is more preferred. In addition, from the same viewpoint, the carbon number is preferably 2 or more. In addition, an upper limit thereof is preferably 20 or less, more preferably 12 or less, still more preferably 8 or less, and especially preferably 4 or less.

Examples of the alkylene group include a methylene group, a 1,1-ethylene group, a 1,2-ethylene group, various propylene groups, such as 1,3-propylene, 1,2-propylene, and 2,2-propylene, various butylene groups, various pentylene groups, various hexylene groups, various heptylene groups, various octylene groups, various nonylene groups, various decylene groups, various undecylene groups, various dodecylene groups, various tridecylene groups, various tetradecylene groups, various pentadecylene groups, various hexadecylene groups, various heptadecylene groups, various octadecylene groups, various nonadecylene groups, various eicosylene groups, various heneicosylene groups, various docosylene groups, various tricosylene groups, and various tetracosylene groups. In addition, examples of the alkenylene group include those resulting from removal of one hydrogen atom from the aforementioned alkylene group.

X¹¹, X¹², X¹³, and X¹⁴ are each independently an oxygen atom or a sulfur atom, provided that at least one of X¹¹, X¹², X¹³, and X¹⁴ is a sulfur atom. From the viewpoint of obtaining more excellent anti-seizing properties and anti-wear properties, X¹¹ and X¹² are each preferably an oxygen atom, X¹³ is preferably an oxygen atom, and X¹⁴ is preferably a sulfur atom.

From the viewpoint of obtaining more excellent anti-seizing properties and anti-wear properties, among the compounds represented by the general formula (1), a compound represented by the general formula (1) where R¹¹ is a hydrogen atom or a hydroxy group; R¹² and R¹³ are each independently a hydroxy group or -X¹³-R¹⁵-X¹⁴-R¹⁶, provided that at least one of R¹² and R¹³ is -X¹³-R¹⁵-X¹⁴-R¹⁶; R¹⁵ is a hydrocarbon group having 1 or more and 4 or less carbon atoms; R¹⁶ is a hydrocarbon group having 6 or more and 10 or less carbon atoms; X¹¹ is an oxygen atom; and X¹³ and X¹⁴ are each independently an oxygen atom or a sulfur atom, provided that at least one of X¹³ and X¹⁴ is a sulfur atom, is preferred. In addition, a compound represented by the general formula (1) where the hydrocarbon group for R¹⁶ is an alkyl group or an alkenyl group, and the hydrocarbon group for R¹⁵ is an alkylene group or an alkenylene group is more preferred; and a compound represented by the general formula (1) where the hydrocarbon group for R¹⁶ is an alkyl group, the hydrocarbon group for R¹⁵ is an alkylene group, X¹³ is an oxygen atom, and X¹⁴ is a sulfur atom is still more preferred.

In the general formula (2), R²¹, R²², and R²⁴ are each independently a hydrogen atom or a hydrocarbon group having 1 or more and 24 or less carbon atoms; R²³ is a hydrocarbon group having 1 or more and 24 or less carbon atoms; R²⁵ is an organic group or a nitrogen-containing group; and X²¹, X²², X²³, and X²⁴ are each independently an oxygen atom or a sulfur atom, provided that at least one of X²¹, X²², X²³, and X²⁴ is a sulfur atom.

From the viewpoint of obtaining more excellent anti-seizing properties and anti-wear properties, preferred examples of the hydrocarbon group having 1 or more and 24 or less carbon atoms for R²¹, R²², and R²⁴ include an alkyl group, an alkenyl group, a cycloalkyl group, an aryl group, and an arylalkyl group as exemplified above in the hydrocarbon group having 1 or more and 24 or less carbon atoms for R¹⁴ and R¹⁶ in the general formula (1).

From the viewpoint of obtaining more excellent anti-seizing properties and anti-wear properties, in the case where the hydrocarbon group for R²¹ and R²² is an alkyl group or an alkenyl group, its carbon number is preferably 2 or more, and more preferably 3 or more, and an upper limit thereof is preferably 16 or less, more preferably 8 or less, still more preferably 6 or less, and especially preferably 4 or less. From the same viewpoint, in the case where R²⁴ is an alkyl group, its carbon number is 1 or more, and an upper limit thereof is preferably 12 or less, more preferably 8 or less, and still more preferably 4 or less. In addition, in the case where R²⁴ is an alkenyl group, its carbon number is 2 or more, and an upper limit thereof is preferably 16 or less, more preferably 8 or less, and still more preferably 4 or less.

The hydrocarbon group having 1 or more and 24 or less carbon atoms for R²³ is not particularly limited so long as it is a hydrocarbon group having three bonds. From the viewpoint of obtaining more excellent anti-seizing properties and anti-wear properties, for example, hydrocarbon groups having three bonds, resulting from removal of two hydrogen atoms from each of an alkyl group, an alkenyl group, a cycloalkyl group, an aryl group, and an arylalkyl group as exemplified above in the hydrocarbon group having 1 or more and 24 or less carbon atoms for R¹⁴ and R¹⁶ in the general formula (1), are preferred; hydrocarbon groups having three bonds, resulting from removal of two hydrogen atoms from each of an alkyl group and an alkenyl group, are more preferred; and hydrocarbon groups having three bonds, resulting from removal of two hydrogen atoms from an alkyl group, are still more preferred. From the same viewpoint, the carbon number of R²³ is preferably 2 or more, and an upper limit thereof is preferably 12 or less, more preferably 8 or less, and still more preferably 4 or less.

From the viewpoint of obtaining more excellent anti-seizing properties and anti-wear properties, the organic group for R²⁵ is preferably an oxygen-containing group, such as a carboxy group, an acyl group, an acyloxy group, and an ester group.

The acyl group is an organic group represented by R²⁶-C(=O)-; the acyloxy group is an organic group represented by R²⁷-C(=O)O-; and the ester group is an organic group represented by -R²⁸-C(=O)OR²⁹.

Here, from the viewpoint of obtaining more excellent anti-seizing properties and anti-wear properties, preferred examples of R²⁶ and R²⁷ include an alkyl group and an alkenyl group as exemplified above in the hydrocarbon group having 1 or more and 24 or less carbon atoms for R¹⁴ and R¹⁶ in the general formula (1). Among those, an alkyl group is more preferred. From the same viewpoint, preferred examples of R²⁹ include an alkyl group, an alkenyl group, a cycloalkyl group, an aryl group, and an arylalkyl group as exemplified above in the hydrocarbon group having 1 or more and 24 or less carbon atoms for R¹⁴ and R¹⁶ in the general formula (1). Among those, an alkyl group and an alkenyl group are more preferred, and an alkyl group is still more preferred.

From the same viewpoint, the carbon number of each of R²⁶, R²⁷, and R²⁹ is preferably 2 or more, and an upper limit thereof is preferably 12 or less, more preferably 8 or less, and still more preferably 4 or less.

R²⁸ is a single bond or a hydrocarbon group, and from the viewpoint of obtaining more excellent anti-seizing properties and anti-wear properties, preferred examples of the hydrocarbon group include an alkylene group and an alkenylene group as exemplified above in the hydrocarbon group having 1 or more and 24 or less carbon atoms for R¹⁵ in the general formula (1). Of those, an alkenylene group is more preferred. In addition, from the same viewpoint, the carbon number of the hydrocarbon group of R²⁸ is preferably 2 or more, and an upper limit thereof is preferably 12 or less, more preferably 8 or less, and still more preferably 4 or less.

From the viewpoint of obtaining more excellent anti-seizing properties and anti-wear properties, preferred examples of the nitrogen-containing group for R²⁵ include, in addition to an amino group, nitrogen-containing groups resulting from substitution of one or two hydrogen atoms of an amino group, such as an alkylamino group, an alkenylamino group, a cycloalkylamino group, an arylamino group, and an arylalkylamino group, with a hydrocarbon group, such as an alkyl group, an alkenyl group, a cycloalkyl group, an aryl group, and an arylalkyl group.

Here, from the viewpoint of obtaining more excellent anti-seizing properties and anti-wear properties, preferred examples of the hydrocarbon group which is contained in the nitrogen-containing group include an alkyl group, an alkenyl group, a cycloalkyl group, an aryl group, and an arylalkyl group as exemplified above in the hydrocarbon group having 1 or more and 24 or less carbon atoms for R¹⁴ and R¹⁶ in the general formula (1). Among those, an alkyl group and an alkenyl group are more preferred, and an alkyl group is still more preferred. From the same viewpoint, the carbon number of the hydrocarbon group which is contained in the nitrogen-containing group is preferably 2 or more, and an upper limit thereof is preferably 12 or less, more preferably 8 or less, and still more preferably 4 or less.

X²¹, X²², X²³, and X²⁴ are each independently an oxygen atom or a sulfur atom, provided that at least one of X²¹, X²², X²³, and X²⁴ is a sulfur atom. From the viewpoint of obtaining more excellent anti-seizing properties and anti-wear properties, X²¹ and X²² are each preferably an oxygen atom, and X²³ and X²⁴ are each preferably a sulfur atom.

From the viewpoint of obtaining more excellent anti-seizing properties and anti-wear properties, among the compounds represented by the general formula (2), a compound represented by the general formula (2) where R²¹ and R²² are each independently a hydrocarbon group having 1 or more and 6 or less carbon atoms; R²³ is a hydrocarbon group having 1 or more and 4 or less carbon atoms; R²⁴ is a hydrogen atom or a hydrocarbon group having 1 or more and 4 or less carbon atoms; R²⁵ is a carboxy group, an acyloxy group having an alkyl group having 1 or more and 4 or less carbon atoms (R²⁶ is an alkyl group having 1 or more and 4 or less carbon atoms), or an alkyl ester group having an alkyl group having 1 or more and 4 or less carbon atoms (R²⁹ is an alkyl group having 1 or more and 4 or less carbon atoms); X²¹ and X²² are each an oxygen atom; and X²³ and X²⁴ are each a sulfur atom, is preferred. In addition, a compound represented by the general formula (2) where the hydrocarbon group for R²¹ and R²² is an alkyl group or an alkenyl group, and the hydrocarbon group for R²³ is an alkylene group or an alkenylene group is more preferred; and a compound represented by the general formula (2) where the hydrocarbon group for R²¹ and R²² is an alkyl group, and the hydrocarbon group for R²³ is an alkylene group is still more preferred.

From the viewpoint of obtaining more excellent anti-seizing properties and anti-wear properties, the content of the sulfur atom in the sulfur- and phosphorus-containing anti-wear agent is preferably 3% by mass or more, more preferably 5% by mass or more, and still more preferably 10% by mass or more. In addition, an upper limit thereof is preferably 30% by mass or less, more preferably 28% by mass or less, and still more preferably 25% by mass or less. In addition, from the same viewpoint, the content of the phosphorus atom in the sulfur- and phosphorus-containing anti-wear agent is preferably 1% by mass or more, more preferably 2% by mass or more, and still more preferably 3% by mass or more. In addition, an upper limit thereof is preferably 15% by mass or less, more preferably 12% by mass or less, and still more preferably 10% by mass or less.

From the viewpoint of obtaining more excellent anti-seizing properties and anti-wear properties, the content of the sulfur- and phosphorus-containing anti-wear agent on a basis of the whole amount of the composition is 0.05% by mass or more, more preferably 0.1% by mass or more, and still more preferably 0.3% by mass or more. In addition, an upper limit thereof is 5% by mass or less, more preferably 3% by mass or less, and still more preferably 1.5% by mass or less. In the present embodiment, the sulfur- and phosphorus-containing anti-wear agent can be used either alone or in combination of two or more thereof.

### <Phosphoric Acid Ester and Amine Salt Thereof, and Polysulfide>

It is preferred that the lubricating oil composition of the present embodiment further contains at least one selected from a phosphoric acid ester and an amine salt thereof, and a polysulfide. When the lubricating oil composition of the present embodiment contains such a component, more excellent anti-seizing properties and anti-wear properties are obtained.

### (Phosphoric Acid Ester and Amine Salt Thereof)

From the viewpoint of obtaining more excellent anti-seizing properties and anti-wear properties, preferred examples of the phosphoric acid ester and its amine salt include, in addition to phosphoric acid esters, such as an alkyl phosphate, an alkenyl phosphate, an aryl phosphate, and an arylalkyl phosphate, corresponding acidic phosphoric acid esters, phosphorous acid esters, and acidic phosphorous acid esters, and amine salts thereof. Above all, acidic phosphoric acid esters, acidic phosphorous acid esters, and amine salts thereof are more preferred; acidic phosphoric acid esters and amine salts thereof are still more preferred; and acidic phosphoric acid esters are especially preferred. Examples of the acidic phosphoric acid ester include a compound represented by the following general formula (3), and examples of the acidic phosphorous acid ester include a compound represented by the following general formula (4). In the present embodiment, the aforementioned phosphoric acid ester and its amine salt can be used either alone or in combination of plural kinds thereof.

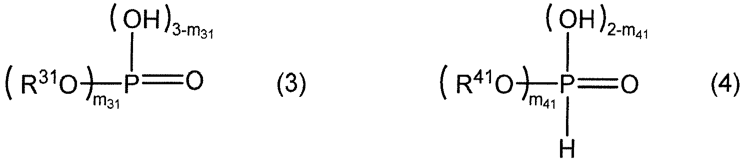

In the general formula (3), R³¹ is a hydrocarbon group having 1 or more and 24 or less carbon atoms, and m₃₁ is 1, 2, or 3. In the case where m₃₁ is 2 or 3, plural R³¹'s may be the same as or different from each other.

In the general formula (4), R⁴¹ is a hydrocarbon group having 1 or more and 24 or less carbon atoms, and m₄₁ is 1 or 2. In the case where m₄₁ is 2, plural R⁴¹'s may be the same as or different from each other.

From the viewpoint of obtaining more excellent anti-seizing properties and anti-wear properties, preferred examples of the hydrocarbon group having 1 or more and 24 or less carbon atoms for R³¹ and R⁴¹ include an alkyl group, an alkenyl group, a cycloalkyl group, an aryl group, and an arylalkyl group as exemplified above in the hydrocarbon group having 1 or more and 24 or less carbon atoms for R¹⁴ and R¹⁶ in the general formula (1). Among those, an alkyl group and an alkenyl group are more preferred, and an alkenyl group is still more preferred. In addition, from the same viewpoint, in the case where the hydrocarbon group for R³¹ and R⁴¹ is an alkyl group or an alkenyl group, its carbon number is preferably 1 or more, more preferably 8 or more, still more preferably 12 or more, and especially preferably 16 or more. In addition, an upper limit thereof is preferably 23 or less, more preferably 22 or less, and still more preferably 20 or less.

In the case of an amine salt of a phosphoric acid ester, from the viewpoint of obtaining more excellent anti-seizing properties and anti-wear properties, preferred examples of the hydrocarbon group having 1 or more and 24 or less carbon atoms for R³¹ and R⁴¹ include an alkyl group, an alkenyl group, a cycloalkyl group, an aryl group, and an arylalkyl group as exemplified above in the hydrocarbon group having 1 or more and 24 or less carbon atoms for R¹⁴ and R¹⁶ in the general formula (1). Among those, an alkyl group and an alkenyl group are more preferred, and an alkyl group is still more preferred. In addition, in the case where the hydrocarbon group for R³¹ and R⁴¹ is an alkyl group or an alkenyl group, its carbon number is preferably 2 or more, more preferably 3 or more, and still more preferably 4 or more. In addition, an upper limit thereof is preferably 16 or less, more preferably 12 or less, and still more preferably 10 or less.

From the viewpoint of obtaining more excellent anti-seizing properties and anti-wear properties, the phosphoric acid ester is preferably the compound represented by the general formula (3). In addition, from the same viewpoint, among the compounds represented by the general formula (3), a compound represented by the general formula (3) where R³¹ is a hydrocarbon having 4 or more and 20 or less carbon atoms, and m₃₁ is 1 or 2, is preferred. Among those a compound represented by the general formula (3) where R³¹ is an alkyl group or an alkenyl group each having 8 or more and 20 or less carbon atoms is more preferred, a compound represented by the general formula (3) where R³¹ is an alkyl group or an alkenyl group each having 12 or more and 20 or less carbon atoms is still more preferred, and a compound represented by the general formula (3) where R³¹ is an alkenyl group having 16 or more and 20 or less carbon atoms is especially preferred.

From the viewpoint of obtaining more excellent anti-seizing properties and anti-wear properties, the content of the phosphoric acid ester or its amine on a basis of the whole amount of the composition is preferably 0.01% by mass or more, more preferably 0.03% by mass or more, and still more preferably 0.05% by mass or more as expressed in terms of a phosphorus atom. In addition, an upper limit thereof is preferably 1% by mass or less, more preferably 0.5% by mass or less, and still more preferably 0.3% by mass or less.

From the viewpoint of obtaining more excellent anti-seizing properties and anti-wear properties, the content of the phosphoric acid ester or its amine on a basis of the whole amount of the composition is preferably 0.1% by mass or more, more preferably 0.5% by mass or more, and still more preferably 1% by mass or more. In addition, an upper limit thereof is preferably 5% by mass or less, more preferably 4% by mass or less, and still more preferably 3% by mass or less.

### (Polysulfide)

Although the polysulfide is not particular limited so long as it is a compound having plural sulfur atoms in a molecule thereof, from the viewpoint of obtaining more excellent anti-seizing properties and anti-wear properties, at least one selected from compounds represented by the following general formulae (5) and (6) is preferred.

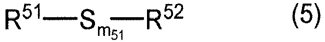

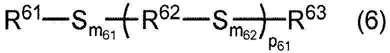

In the general formula (5), R⁵¹ and R⁵² are each independently a hydrocarbon group having 1 or more and 24 or less carbon atoms, and m₅₁ is an integer of 2 or more and 10 or less.

In the general formula (6), R⁶¹ and R⁶³ are each independently a hydrocarbon group having 1 or more and 24 or less carbon atoms; R⁶² is a hydrocarbon group having 1 or more and 24 or less carbon atoms; m₆₁ and m₆₂ are each an integer of 1 or more and 10 or less; and p₆₁ is an integer of 1 or more and 8 or less.

From the viewpoint of obtaining more excellent anti-seizing properties and anti-wear properties, preferred examples of the hydrocarbon group having 1 or more and 24 or less carbon atoms for R⁵¹, R⁵², R⁶¹, and R⁶³ include an alkyl group, an alkenyl group, a cycloalkyl group, an aryl group, and an arylalkyl group as exemplified above in the hydrocarbon group having 1 or more and 24 or less carbon atoms for R¹⁴ and R¹⁶ in the general formula (1). Among those, an alkyl group and an alkenyl group are more preferred, and in the case of R⁵¹ and R⁵², an alkyl group is still more preferred, and in the case of R⁶¹ and R⁶³, an alkenyl group is more preferred. In addition, from the same viewpoint, the carbon number of the hydrocarbon group for R⁵¹, R⁵², R⁶¹, and R⁶³, in the case where the hydrocarbon group is an alkyl group or an alkenyl group, is preferably 2 or more, more preferably 3 or more, and still more preferably 4 or more. In addition, an upper limit thereof is preferably 16 or less, more preferably 8 or less, and still more preferably 6 or less.

From the viewpoint of obtaining more excellent anti-seizing properties and anti-wear properties, preferred examples of the hydrocarbon group having 1 or more and 24 or less carbon atoms for R⁶² include an alkylene group and an alkenylene group as exemplified above in the hydrocarbon group having 1 or more and 24 or less carbon atoms for R¹⁵ in the general formula (1). Of those, an alkylene group is more preferred. In addition, from the same viewpoint, its carbon number is preferably 2 or more, and more preferably 3 or more. In addition, an upper limit thereof is preferably 16 or less, more preferably 12 or less, still more preferably 8 or less, and especially preferably 6 or less. In the case where p₆₁ is 2 or more, plural R⁶²'s may be the same as different from each other.

m₅₁ is an integer of 2 or more and 10 or less, and from the viewpoint of obtaining more excellent anti-seizing properties and anti-wear properties, it is preferably 8 or less, more preferably 6 or less, still more preferably 4 or less, and especially preferably 3 or less. m₆₁ and m₆₂ are each an integer of 1 or more and 10 or less, and from the viewpoint of obtaining more excellent anti-seizing properties and anti-wear properties, they are each preferably 8 or less, more preferably 6 or less, still more preferably 4 or less, and especially preferably 2.

p₆₁ is 1 or more and 8 or less, and from the viewpoint of obtaining more excellent anti-seizing properties and anti-wear properties, it is preferably 6 or less, more preferably 4 or less, and still more preferably 3 or less.

From the viewpoint of obtaining more excellent anti-seizing properties and anti-wear properties, thereby more reducing an odor, the content of the polysulfide on a basis of the whole amount of the composition is preferably 0.1% by mass or more, more preferably 0.5% by mass or more, and still more preferably 1% by mass or more as expressed in terms of a sulfur atom. In addition, an upper limit thereof is preferably 5% by mass or less, more preferably 4% by mass or less, and still more preferably 3% by mass or less.

From the viewpoints of obtaining more excellent anti-seizing properties and anti-wear properties, thereby more reducing an odor, the content of the polysulfide on a basis of the whole amount of the composition is preferably 0.5% by mass or more, more preferably 1% by mass or more, still more preferably 2.5% by mass or more, and especially preferably 3.5% by mass or more. In addition, an upper limit thereof is preferably 10% by mass or less, more preferably 8% by mass or less, still more preferably 7% by mass or less, and especially preferably 6% by mass or less.

### <Succinimide-Based Dispersant>

It is preferred that the lubricating oil composition of the present embodiment contains a succinimide-based dispersant.

As for the succinimide-based dispersant, an alkenyl succinimide or an alkyl succinimide having an alkenyl group or an alkyl group in a molecule thereof is preferably exemplified, and examples thereof include a succinic monoimide represented by the following general formula (7) and a succinic bisimide represented by the following general formula (8).

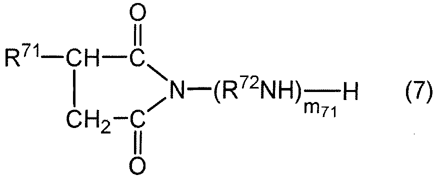

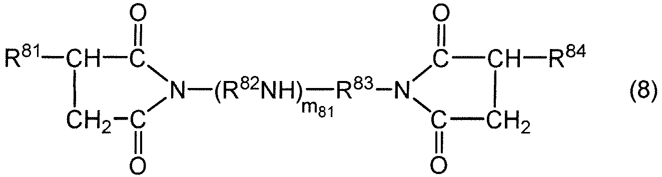

In the general formula (7), R⁷¹ is an alkenyl group or an alkyl group; R⁷² is an alkylene group having 1 or more and 6 or less carbon atoms; and m₇₁ is an integer of 1 or more and 20 or less. In addition, in the case where m₇₁ is 2 or more, plural R⁷²'s may be the same as or different from each other.

In the general formula (8), R⁸¹ and R⁸⁴ are each independently an alkenyl group or an alkyl group; R⁸² and R⁸³ are each an alkylene group having 1 or more and 6 or less carbon atoms; and m₈₁ is an integer of 0 or more and 20 or less. In addition, in the case where m₈₁ is 2 or more, plural R⁸²'s may be the same as or different from each other.

As for the alkenyl group or alkyl group for R⁷¹, R⁸¹, and R⁸⁴, a mass average molecular weight thereof is preferably 500 or more, more preferably 700 or more, and still more preferably 800 or more, and it is preferably 3,000 or less, more preferably 2,000 or less, and still more preferably 1,500 or less. When such an alkenyl group or alkyl group is adopted, the solubility in the base oil is improved, and an improving effect of more excellent anti-seizing properties and anti-wear properties is obtained.

Examples of the alkenyl group for R⁷¹, R⁸¹, and R⁸⁴ include a polybutenyl group, a polyisobutenyl group, and an ethylene-propylene copolymer, and examples of the alkyl group include those resulting from hydrogenation of such an alkenyl group. As for the polybutenyl group, those obtained through polymerization of a mixture of 1-butene and isobutene, or high-purity isobutene are preferably used. Above all, the alkenyl group is preferably a polybutenyl group or an isobutenyl group, and examples of the alkyl group include those resulting from hydrogenation of a polybutenyl group or an isobutenyl group. In the present embodiment, from the viewpoint of obtaining an improving effect of more excellent anti-seizing properties and anti-wear properties, an alkenyl group is preferred, namely an alkenyl succinimide is preferred.

From the viewpoints of improving the solubility in the base oil and obtaining an improving effect of more excellent anti-seizing properties and anti-wear properties, preferred examples of the alkylene group having 1 or more and 6 or less carbon atoms for R⁸² and R⁸³ include an alkylene group as exemplified above in the hydrocarbon group having 1 or more and 24 or less carbon atoms for R¹⁵ in the general formula (1). From the same viewpoint, the carbon number of the alkylene group for R⁸² and R⁸³ is preferably 2 or more, and an upper limit thereof is preferably 5 or less, more preferably 4 or less, and still more preferably 3 or less.

m₇₁ is an integer of 1 or more and 20 or less, and from the viewpoints of improving the solubility in the base oil and obtaining an improving effect of more excellent anti-seizing properties and anti-wear properties, it is preferably 2 or more, and more preferably 3 or more, and an upper limit thereof is preferably 15 or less, more preferably 10 or less, still more preferably 5 or less, and especially preferably 3 or 4. In addition, m₈₁ is an integer of 0 or more and 20 or less, and from the same viewpoint as in m₇₁, it is preferably 1 or more, and more preferably 2 or more, and an upper limit thereof is preferably 15 or less, more preferably 10 or less, still more preferably 5 or less, and especially preferably 3 or 4.

In the present embodiment, the succinimide-based dispersant may also be a borated succinimide. The borated succinimide is one obtained by allowing the aforementioned succinimide to react with a boron compound, such as boric acid, a boric acid salt, and a boric acid ester.

From the viewpoint of obtaining an improving effect of more excellent anti-seizing properties and anti-wear properties, a mass ratio (B/N) of a boron atom and a nitrogen atom in the borated succinimide is preferably 0.1 or more, more preferably 0.2 or more, and still more preferably 0.5 or more. In addition, from the same viewpoint, an upper limit thereof is preferably 3 or less, more preferably 2 or less, and still more preferably 1.5 or less.

From the viewpoint of obtaining an improving effect of more excellent anti-seizing properties and anti-wear properties, the content of the succinimide-based dispersant on a basis of the whole amount of the composition is preferably 0.1% by mass or more, more preferably 0.5% by mass or more, still more preferably 1% by mass or more, and especially preferably 2% by mass or more. In addition, an upper limit thereof is preferably 15% by mass or less, more preferably 10% by mass or less, still more preferably 8% by mass or less, and especially preferably 7% by mass or less.

### <Other Additives>

In the lubricating oil composition of the present embodiment, other additives than the base oil containing at least a mineral oil, the sulfur- and phosphorus-containing anti-wear agent, the phosphoric acid ester and its amine salt, the polysulfide, and the succinimide-based dispersant as mentioned above, such as an antioxidant, an anti-wear agent, an extreme pressure agent, a viscosity index improver, a pour point depressant, a dispersant, and an anti-foaming agent, can be properly chosen and blended within a range where the purpose of the present invention is not hindered. These additives can be used either alone or in combination of plural kinds thereof. The lubricating oil composition of the present embodiment may be composed of the base oil containing at least a mineral oil and the sulfur- and phosphorus-containing anti-wear agent as mentioned above; may be composed of the base oil containing at least a mineral oil, the sulfur- and phosphorus-containing anti-wear agent, the phosphoric acid ester and its amine salt, and the polysulfide as mentioned above; or may be composed of the base oil containing at least a mineral oil, the sulfur- and phosphorus-containing anti-wear agent, the phosphoric acid ester and its amine salt, the polysulfide, and the succinimide-based dispersant as mentioned above. In addition, the lubricating oil composition of the present embodiment may also be composed of the base oil containing at least a mineral oil, the sulfur- and phosphorus-containing anti-wear agent, the phosphoric acid ester and its amine salt, the polysulfide, the succinimide-based dispersant, and other additives.

Although a total content of the other additives is not particularly limited within a range where it is not contrary to the purpose of the present invention, taking into account an effect for adding the other additives, it is preferably 0.1% by mass or more, more preferably 0.5% by mass or more, and still more preferably 1% by mass or more on a basis of the whole amount of the composition. In addition, an upper limit thereof is preferably 15% by mass or less, more preferably 13% by mass or less, and still more preferably 10% by mass or less.

### (Antioxidant)

Examples of the antioxidant include amine-based antioxidants, such as a diphenylamine-based antioxidant and a naphthylamine-based antioxidant; phenol-based antioxidants, such as a monophenol-based antioxidant, a diphenol-based antioxidant, and a hindered phenol-based antioxidant; molybdenum-based antioxidants, such as a molybdenum amine complex obtained through a reaction between molybdenum trioxide and/or molybdic acid and an amine compound; sulfur-based antioxidants, such as phenothiazine, dioctadecyl sulfide, dilauryl 3,3'-thiodipropionate, and 2-mercaptobenzimidazole; and phosphorus-based antioxidants, such as triphenyl phosphite, diisopropylmonophenyl phosphite, and monobutyldiphenyl phosphite.

The content of the antioxidant is preferably 0.1% by mass or more, more preferably 0.3% by mass or more, and still more preferably 0.5% by mass or more on a basis of the whole amount of the composition. In addition, an upper limit thereof is preferably 3% by mass or less, more preferably 2% by mass or less, and still more preferably 1.5% by mass or less.

### (Anti-Wear Agent or Extreme Pressure Agent)

Examples of the anti-wear agent or extreme pressure agent include other anti-wear agents or extreme pressure agents than the sulfur- and phosphorus-containing anti-wear agent, the phosphoric acid ester and its amine salt, and the polysulfide as mentioned above, for example, sulfur-containing compounds, such as a thiocarbonate compound and a thiadiazole compound; and metal-containing compounds, such as zinc dithiophosphate, zinc phosphate, zinc dithiocarbamate, molybdenum dithiocarbamate, and molybdenum dithiophosphate.

### (Viscosity Index Improver)

Examples of the viscosity index improver include polymers, such as a non-dispersion type polymethacrylate, a dispersion-type polymethacrylate, and a styrene-based copolymer (for example, a styrene-diene copolymer and a styrene-isoprene copolymer).

### (Pour Point Depressant)

Examples of the pour point depressant include an ethylene-vinyl acetate copolymer, a condensate between a chlorinated paraffin and naphthalene, a condensate between a chlorinated paraffin and phenol, a polymethacrylate, and a polyalkylstyrene.

### (Dispersant)

Examples of the dispersant include other dispersants than the aforementioned succinimide dispersant, for example, ashless dispersants, such as a benzylamine compound, a boron-containing benzylamine compound, a succinic acid ester compound, and a monovalent or divalent carboxylic acid amide compound, represented by a fatty acid or succinic acid.

### (Anti-Foaming Agent)

Examples of the anti-foaming agent include a silicone oil, a fluorosilicone oil, and a fluoroalkyl ether.

### (Various Physical Properties of Lubricating Oil Composition)

A 100°C kinematic viscosity of the lubricating oil composition of the present embodiment is preferably 8 mm²/s or more, more preferably 8.5 mm²/s or more, and still more preferably 9.5 mm²/s or more. In addition, an upper limit thereof is preferably 12 mm²/s or less, more preferably 11.9 mm²/s or less, and still more preferably 11.8 mm²/s or less. A 40°C kinematic viscosity of the lubricating oil composition of the present embodiment is preferably 20 mm²/s or more, more preferably 40 mm²/s or more, and still more preferably 60 mm²/s or more. In addition, an upper limit thereof is preferably 110 mm²/s or less, more preferably 105 mm²/s or less, and still more preferably 100 mm²/s or less. When the kinematic viscosity of the lubricating oil composition falls within the aforementioned range, more excellent anti-seizing properties and anti-wear properties are obtained, and a satisfactory oil film is formed on a sliding surface, whereby wear of an instrument to be caused due to oil film shortage can be reduced.

From the same viewpoint, a viscosity index of the lubricating oil composition is preferably 95 or more, more preferably 100 or more, and still more preferably 105 or more.

In the lubricating oil composition of the present embodiment, a wear scar diameter (mm) by the Shell four-ball wear test is preferably less than 0.45 mm, more preferably 0.4 mm or less, and still more preferably 0.38 mm or less. Here, the wear scar diameter (mm) by the Shell four-ball wear test is a value measured by the method as described in the section of Examples.

In the lubricating oil composition of the present embodiment, an OK load (lbs) by the high-speed Timken test is preferably 15 lbs or more, more preferably 16 lbs or more, and still more preferably 17 lbs or more. Here, the OK load (lbs) by the high-speed Timken test is a value measured by the method as described in the section of Examples.

### <Application>

As described above, the lubricating oil composition of the present embodiment is excellent in anti-seizing properties and anti-wear properties. Taking advantage of such characteristics, the lubricating oil composition of the present embodiment is, for example, suitably used as internal combustion engine oils to be used for a gasoline engine, a diesel engine, and other internal combustion engines; automotive gear oils of a gasoline vehicle, a hybrid vehicle, an electric vehicle, etc.; and besides, gear oils, such as industrial gear oils of general machinery. The lubricating oil composition of the present embodiment is suitably used especially as a manual transmission oil and a differential gear oil among the automotive gear oils. In addition, the lubricating oil composition of the present embodiment is also suitably used for other applications, for example, an internal combustion engine, a hydraulic machine, a turbine, a compressor, a machine tool, a cutting tool, a toothed wheel (gear), a fluid bearing, and machinery provided with a rolling bearing.

### [Lubrication Method]

The lubrication method of the present embodiment is a lubrication method including using the aforementioned lubricating oil composition of the present embodiment. The lubricating oil composition which is used for the lubrication method of the present embodiment is excellent in anti-seizing properties and anti-wear properties. Therefore, the lubrication method of the present embodiment is, for example, suitably adopted for lubrication of a gear, such as lubrication of an internal combustion engine, lubrication of an automotive gear of a gasoline vehicle, a hybrid vehicle, an electric vehicle, etc.; and besides, lubrication of an industrial gear of general machinery, etc. In addition, the lubrication method of the present embodiment is also suitably adopted for lubrication in other applications, for example, an internal combustion engine, a hydraulic machine, a turbine, a compressor, a machine tool, a cutting tool, a toothed wheel (gear), a fluid bearing, and machinery provided with a rolling bearing.

### [Gear]

The gear of the present embodiment is a gear using the aforementioned lubricating oil composition of the present embodiment. The lubricating oil composition which is used for the gear of the present embodiment is excellent in anti-seizing properties and anti-wear properties. Therefore, the gear of the present embodiment is suitably used as an automotive gear of a gasoline vehicle, a hybrid vehicle, an electric vehicle, etc.; and besides, an industrial gear of general machinery, etc.

### Examples

Next, the present invention is described in more detail by reference with Examples, but it should be construed that the present invention is by no means limited by these Examples.

### Examples 1 to 8 and Comparative Examples 1 to 4

Lubricating oil compositions were each prepared according to a blend formulation (mass%) shown in Table 1. The resulting lubricating oil compositions were each subjected to various tests by the following methods, and physical properties thereof were evaluated. The evaluation results are shown in Tables 1 and 2.

The measurement and evaluation of properties of the lubricating oil compositions were performed according to the following methods.

### (1) Kinematic Viscosity

The kinematic viscosity at each of 40°C and 100°C was measured in conformity with JIS K2283:2000.

### (2) Viscosity Index (VI)

The measurement was performed in conformity with JIS K2283:2000.

### (3) Contents of Sulfur Atom and Phosphorus Atom

The measurement was performed in conformity with JIS-5S-38-92.

### (4) Shell Four-Ball Wear Test

The test was performed under a condition at 80°C, 1,500 rpm, and 196 N for 60 minutes in conformity with ASTM D4172-94 (2010), and a wear scar diameter (mm) was measured and judged according to the following criteria. It is indicated that the smaller this value, the more excellent the anti-wear properties.
A: The wear scar diameter was less than 0.45 mm.
B: The wear scar diameter was 0.45 mm or more and less than 0.6 mm.
C: The wear scar diameter was 0.6 mm or more.

### (5) High-Speed Timken Test

The high-speed Timken test was performed in conformity with JIS K2519 in such a manner that while setting a rotation rate to 3,000 rpm and an oil temperature to 40°C, respectively, in the step load, an initial load was started from 5 lbs; in the case where seizing was caused, the load was decreased by 2.5 lbs, whereas in the case where seizing was not caused, the load was increased by 2.5 lbs; and when repeating this test, a maximum load at which seizing was not caused was defined as an OK load (lbs). The OK load was judged according to the following criteria. It is indicated that the larger this value, the more excellent the anti-seizing properties.
A: The OK load was 20 lbs or more.
B: The OK load was 15 lbs or more and less than 20 lbs.
C: The OK load was less than 15 lbs.

**Table 1**

| | | Example | | | | | | | | Comparative Example | | | |
|---|---|---|---|---|---|---|---|---|---|---|---|---|---|
| | | 1 | 2 | 3 | 4 | 5 | 6 | 7 | 8 | 1 | 2 | 3 | 4 |
| Blend formulation | 500N mineral oil | 89.0 | 83.0 | 87.2 | 89.3 | 89.1 | 87.0 | 89.4 | 89.5 | 91.5 | 85.5 | 84.0 | 100.0 |
| | Sulfur- and phosphorus-containing anti-wear agent A | 1.0 | 1.0 | 0.5 | 0.5 | 0.5 | 0.7 | - | - | - | 1.0 | 1.0 | - |
| | Sulfur- and phosphorus-containing anti-wear agent B | - | - | - | - | - | - | 0.6 | - | - | - | - | - |
| | Sulfur- and phosphorus-containing anti-wear agent C | - | - | - | - | - | - | - | 0.5 | - | - | - | - |
| | Phosphoric acid ester | 2.0 | 2.0 | 2.0 | 1.4 | - | - | 2.0 | 2.0 | 2.0 | 2.0 | 1.0 | - |
| | Phosphoric acid ester amine salt | - | - | - | - | 1.6 | 2.3 | - | - | - | - | - | - |
| | Polysulfide A | 5.5 | 5.5 | 5.5 | 4.0 | 4.0 | - | 5.5 | 5.5 | 5.5 | 3.0 | 5.5 | - |
| | Polysulfide B | - | - | - | - | - | 4.0 | - | - | - | - | - | - |
| | Succinimide-based dispersant | 1.5 | 7.5 | 3.8 | 3.8 | 3.8 | 5.0 | 1.5 | 1.5 | - | 7.5 | 7.5 | - |
| | Antioxidant | 1.0 | 1.0 | 1.0 | 1.0 | 1.0 | 1.0 | 1.0 | 1.0 | 1.0 | 1.0 | 1.0 | - |
| | Total | 100.0 | 100.0 | 100.0 | 100.0 | 100.0 | 100.0 | 100.0 | 100.0 | 100.0 | 100.0 | 100.0 | 100.0 |
| Properties | Mass ratio (S/P ratio) of sulfur atom and phosphorus atom | 12.0 | 12.6 | 13.6 | 13.6 | 13.8 | 10.9 | 11.9 | 12.1 | 16.2 | 7.1 | 18.3 | 20.0 |
| | Sulfur atom content (mass%) | 2.15 | 2.14 | 2.02 | 1.54 | 1.54 | 1.75 | 2.21 | 2.17 | 2.01 | 1.22 | 2.05 | 2.36 |
| | Phosphorus atom content (mass%) | 0.179 | 0.170 | 0.148 | 0.113 | 0.112 | 0.160 | 0.185 | 0.179 | 0.124 | 0.172 | 0.112 | 0.120 |
| | 40°C kinematic viscosity (mm²/s) | 78.3 | 94.2 | 86.5 | 89.6 | 90.1 | 95.9 | 84.9 | 83.1 | 79.8 | 99.0 | 93.4 | 85.4 |
| | 100°C kinematic viscosity (mm²/s) | 10.2 | 11.7 | 10.9 | 11.1 | 11.1 | 11.6 | 10.7 | 10.6 | 10.2 | 12.1 | 11.6 | 10.5 |
| | Viscosity index | 112 | 114 | 112 | 111 | 110 | 110 | 110 | 111 | 110 | 113 | 113 | 106 |
| Evaluation | Shell four-ball wear test (mm) | 0.38 | 0.37 | 0.37 | 0.37 | 0.33 | 0.3 | 0.33 | 0.33 | 0.47 | 0.38 | 0.38 | 0.77 |
| | Judgement | A | A | A | A | A | A | A | A | B | A | A | C |
| | High-speed Timken test: OK load (lbs) | 20.0 | 17.5 | 22.5 | 20.0 | 15.0 | 15.0 | 20.0 | 15.0 | 22.5 | 10.0 | 12.5 | 12.5 |
| | Judgement | A | B | A | A | B | B | A | B | A | C | C | C |

Details of the respective components used in the present Examples as shown in Table 1 are as follows. In this specification, with respect to the sulfur atom content and the phosphorus atom content, though it would be possible to calculate them from the sulfur content, the phosphorus content, and so on in the anti-wear agent, the measured values by the measurement method of the aforementioned "(3) Contents of Sulfur Atom and Phosphorus Atom" are applied, and in addition, as mentioned above, the mass ratio (S/P ratio) of the sulfur atom and the phosphorus atom on a basis of the whole amount of the composition is a value obtained through calculation from the measured values of the contents of the sulfur atom and the phosphorus atom.
- 500N mineral oil (hydro-refining mineral oil): A mineral oil classified into Group II of the API Base Oil Category, 100°C kinematic viscosity: 10.9 mm²/s, 40°C kinematic viscosity: 97.5 mm²/s, viscosity index: 96
- Sulfur- and phosphorus-containing anti-wear agent A: In the general formula (1), X¹¹ is an oxygen atom, R¹¹ is a hydrogen atom, R¹² is -O-C₂H₄-S-C₈H₁₇, and R¹³ is -OC₂H₄-S-C₈H₁₇, sulfur content: 14% by mass, phosphorus content: 6% by mass
- Sulfur- and phosphorus-containing anti-wear agent B: In the general formula (2), X²¹ is an oxygen atom, X²² is an oxygen atom, X²³ is a sulfur atom, X²⁴ is a sulfur atom, R²¹ is an i-propyl group, R²² is an i-propyl group, R²³ is -CH₂CH<, R²⁴ is a hydrogen atom, and R²⁵ is -C(=O)OC₂H₅, sulfur content: 20% by mass, phosphorus content: 10% by mass
- Sulfur- and phosphorus-containing anti-wear agent C: In the general formula (2), X²¹ is an oxygen atom, X²² is an oxygen atom, X²³ is a sulfur atom, X²⁴ is a sulfur atom, R²¹ is an i-butyl group, R²² is an i-butyl group, R²³ is -CH₂CH<, R²⁴ is a methyl group, and R²⁵ is -COOH, sulfur content: 20% by mass, phosphorus content: 8% by mass
- Phosphoric acid ester: Oleyl acid phosphate (mixture of monooleyl acid phosphate and dioleyl acid phosphate)
- Phosphoric acid ester amine salt: Beef tallow amine salt of 2-ethylhexyl acid phosphate ("Phosair-41 (a trade name)", manufactured by SC Organic Chemical Co., Ltd.)
- Polysulfide A: Di-t-butyl polysulfide (sulfur content: 40% by mass, in the general formula (5), R⁵¹ and R⁵² are each a t-butyl group. and m₅₁ is a mixture of 2 and 3)
- Polysulfide B: Disulfide (sulfur content: 40% by mass; in the general formula (6), R⁶¹ and R⁶³ are each a 2-methyl-2-propenyl group, R⁶³ is a 2,2-dimethylethylene group, m₆₁ and m₆₂ are each 2, and p₆₁ is 1)
- Succinimide-based dispersant: Borated succinimide (borated polybutenyl succinic monoimide (mass average molecular weight of polyisobutenyl group: 1,100, nitrogen content: 1.6% by mass, boron content: 0.4% by mass))
- Antioxidant: Amine-based antioxidant

From the results of Table 1, it was confirmed that the lubricating oil compositions of Examples 1 to 8 are excellent in the anti-seizing properties and the anti-wear properties.

On the other hand, it was confirmed that the lubricating oil composition of Comparative Example 1 which does not contain the sulfur- and phosphorus-containing anti-wear agent is low in the anti-wear properties; and that the lubricating oil composition of Comparative Example 2 in which the mass ratio (S/P ratio) of the sulfur atom and the phosphorus atom is low as 7.1 and the lubricating oil composition of Comparative Example 3 in which the foregoing mass ratio (S/P ratio) is large as 18.3 are low in the anti-seizing properties.

In the light of the above, it was confirmed that according to the only constitution of the present embodiment, namely the constitution not only containing the base oil and the sulfur- and phosphorus-containing anti-wear agent but also having a mass ratio (S/P ratio) of the sulfur atom and the phosphorus atom contained in the composition falling within a predetermined range, excellent anti-seizing properties and anti-wear properties are obtained.

### Industrial Applicability

The lubricating oil composition of the present embodiment is excellent in anti-seizing properties and anti-wear properties. Therefore, the lubricating oil composition of the present embodiment is, for example, suitably used as internal combustion engine oils to be used for a gasoline engine, a diesel engine, and other internal combustion engine; automotive gear oils of a gasoline vehicle, a hybrid vehicle, an electric vehicle, etc.; and besides, gear oils, such as industrial gear oils of general machinery.

## Claims

1. A lubricating oil composition comprising a base oil containing at least a mineral oil and a sulfur- and phosphorus-containing anti-wear agent, a mass ratio (S/P ratio) of a sulfur atom and a phosphorus atom contained in the composition being 7.5 or more and 16 or less.

2. The lubricating oil composition according to claim 1, further comprising at least one selected from a phosphoric acid ester, an amine salt thereof, and a polysulfide.

3. The lubricating oil composition according to claim 1 or 2, wherein the sulfur- and phosphorus-containing anti-wear agent is at least one selected from compounds represented by the following general formulae (1) and (2): 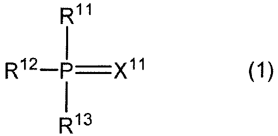 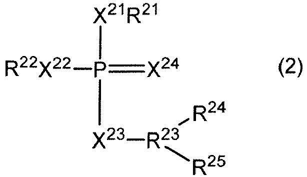 wherein,
in the general formula (1), R¹¹ is a hydrogen atom, a hydroxy group, or a mercapto group; R¹² and R¹³ are each independently a hydroxy group, a mercapto group, -X¹²-R¹⁴, or -X¹³-R¹⁵-X¹⁴-R¹⁶, provided that at least one of R¹² and R¹³ is -X¹²-R¹⁴ or -X¹³-R¹⁵-X¹⁴-R¹⁶; and X¹¹, X¹², X¹³, and X¹⁴ are each independently an oxygen atom or a sulfur atom, provided that at least one of X¹¹, X¹², X¹³, and X¹⁴ is a sulfur atom; R¹⁴ and R¹⁶ are each independently a hydrocarbon group having 1 or more and 24 or less carbon atoms; and R¹⁵ is a hydrocarbon group having 1 or more and 24 or less carbon atoms, and,
in the general formula (2), R²¹, R²², and R²⁴ are each independently a hydrogen atom or a hydrocarbon group having 1 or more and 24 or less carbon atoms; R²³ is a hydrocarbon group having 1 or more and 24 or less carbon atoms; R25 is an organic group or a nitrogen-containing group; and X²¹, X²², X²³, and X²⁴ are each independently an oxygen atom or a sulfur atom, provided that at least one of X²¹, X²², X²³, and X²⁴ is a sulfur atom.

4. The lubricating oil composition according to claim 3, wherein, in general formula (1), R¹¹ is a hydrogen atom or a hydroxy group; R¹² and R¹³ are each independently a hydroxy group or -X¹³-R¹⁵-X¹⁴-R¹⁶, provided that at least one of R¹² and R¹³ is -X¹³-R¹⁵-X¹⁴-R¹⁶; R¹⁵ is a hydrocarbon group having 1 or more and 4 or less carbon atoms; R¹⁶ is a hydrocarbon group having 6 or more and 10 or less carbon atoms; X¹¹ is an oxygen atom; and X¹³ and X¹⁴ are each independently an oxygen atom or a sulfur atom, provided that at least one of X¹³ and X¹⁴ is a sulfur atom.

5. The lubricating oil composition according to claim 3 or 4, wherein, in general formula (2), R²¹ and R²² are each independently a hydrocarbon group having 1 or more and 6 or less carbon atoms; R²³ is a hydrocarbon group having 1 or more and 4 or less carbon atoms; R²⁴ is a hydrogen atom or a hydrocarbon group having 1 or more and 4 or less carbon atoms; R²⁵ is a carboxy group, an acyloxy group having an alkyl group having 1 or more and 4 or less carbon atoms, or an alkyl ester group having an alkyl group having 1 or more and 4 or less carbon atoms; X²¹ and X²² are each an oxygen atom; and X²³ and X²⁴ are each a sulfur atom.

6. The lubricating oil composition according to any one of claims 2 to 5, wherein the phosphoric acid ester is at least one selected from compounds represented by the following general formulae (3) and (4): 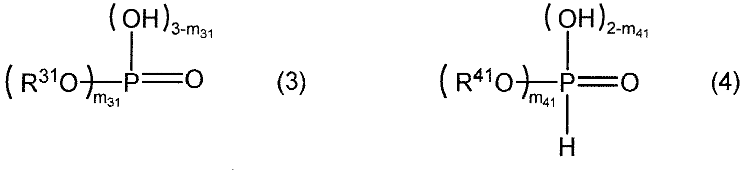 wherein,
in the general formula (3), R³¹ is a hydrocarbon group having 1 or more and 24 or less carbon atoms; m₃₁ is 1, 2, or 3; and in the case where m₃₁ is 2 or 3, plural R³¹'s may be the same as or different from each other, and,
in the general formula (4), R⁴¹ is a hydrocarbon group having 1 or more and 24 or less carbon atoms; m₄₁ is 1 or 2; and in the case where m₄₁ is 2, plural R⁴¹'s may be the same as or different from each other.

7. The lubricating oil composition according to any one of claims 2 to 6, wherein the polysulfide is at least one selected from compounds represented by the following general formulae (5) and (6): 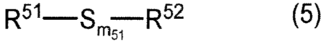 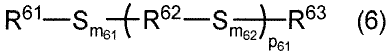 wherein,
in the general formula (5), R⁵¹ and R⁵² are each independently a hydrocarbon group having 1 or more and 24 or less carbon atoms; and m₅₁ is an integer of 2 or more and 10 or less, and,
in the general formula (6), R⁶¹ and R⁶³ are each independently a hydrocarbon group having 1 or more and 24 or less carbon atoms; R⁶² is a hydrocarbon group having 1 or more and 24 or less carbon atoms; m₆₁ and m₆₂ are each an integer of 1 or more and 10 or less; and p₆₁ is an integer of 1 or more and 8 or less.

8. The lubricating oil composition according to any one of claims 1 to 7, further comprising a succinimide-based dispersant.

9. The lubricating oil composition according to any one of claims 1 to 8, which has a 100°C kinematic viscosity of 8 mm²/s or more and 12 mm²/s or less.

10. The lubricating oil composition according to any one of claims 1 to 9, which is to be used for gear oils.

11. A lubrication method comprising using a lubricating oil composition comprising a base oil containing at least a mineral oil and a sulfur- and phosphorus-containing anti-wear agent, a mass ratio (S/P ratio) of a sulfur atom and a phosphorus atom contained in the composition being 7.5 or more and 16 or less.

12. The lubrication method according to claim 11, comprising lubricating gears.

13. A gear comprising a lubricating oil composition comprising a base oil containing at least a mineral oil and a sulfur- and phosphorus-containing anti-wear agent, a mass ratio (S/P ratio) of a sulfur atom and a phosphorus atom contained in the composition being 7.5 or more and 16 or less.
